# EUROPÄISCHE PATENTSCHRIFT

(11) **EP 2 215 620 B1**
(45) Veröffentlichungstag und Bekanntmachung des Hinweises auf die Patenterteilung: **23.03.2016**
(21) Anmeldenummer: 08849606.2
(22) Anmeldetag: 23.10.2008
(51) Int. Cl.: G09G 3/20

(54) **DOKUMENT MIT EINER INTEGRIERTEN ANZEIGEVORRICHTUNG**
DOCUMENT WITH AN INTEGRATED DISPLAY DEVICE
DOCUMENT COMPORTANT UN DISPOSITIF D'AFFICHAGE INTÉGRÉ

(30) Priorität: 12.11.2007 DE 102007000890
(43) Veröffentlichungstag der Anmeldung: 11.08.2010
(73) Patentinhaber: Bundesdruckerei GmbH, 10958 Berlin (DE)
(72) Erfinder: FISCHER, Jörg, 13053 Berlin (DE); PAESCHKE, Manfred, 16348 Wandlitz (DE); PFLUGHOEFFT, Malte, 13347 Berlin (DE); MUTH, Oliver, 12277 Berlin (DE)
(74) Vertreter: Richardt Patentanwälte PartG mbB
(86) Internationale Anmeldenummer: PCT/EP2008/064400
(87) Internationale Veröffentlichungsnummer: WO 2009/062832

(56) Entgegenhaltungen:
- EP-A- 1 094 435
- WO-A-99/08910
- WO-A1-99/21128
- DE-A1-102006 017 764
- US-A1- 2003 231 150

## Beschreibung

Die vorliegende Erfindung betrifft ein Dokument mit einer integrierten Anzeigevorrichtung, insbesondere ein Wert- oder Sicherheitsdokument, ein Lesegerät sowie ein Verfahren zur Verifikation eines Dokuments.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 025 806 bekannt.

Aus der zum Anmeldezeitpunkt unveröffentlichten Patentanmeldung DE 10 2006 031 422.0-53 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Ein weiteres Sicherheitsdokument mit einer konfigurierbaren Anzeige ist aus der WO 99/21128 bekannt

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1.

Eine weitere konfigurierbare Anzeige für Kraftfahrzeuge ist aus der WO99/08910 bekannt. Die kann abhängig von einer Authentifizierung eines Nutzers zusätzliche Informationen darstellen, beispielsweise bei einer unbefugten Nutzung des Fahrzeugs einen entsprechenden Hinweis oder Warnhinweise.

Der Erfindung liegt dem gegenüber die Aufgabe zu Grunde, ein verbessertes Dokument, ein Lesegerät für ein Dokument und ein Verfahren zur Verifikation eines Dokuments zu schaffen.

Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Dokument mit einer integrierten Anzeigevorrichtung geschaffen, die mehrere ansteuerbare Anzeigeelemente aufweist. Jedes der Anzeigeelemente ist zur Abgabe eines optischen Signals ausgebildet, sodass in einem Speicher des Dokuments gespeicherte Bilddaten auf der Anzeigevorrichtung zur visuellen Erfassung durch einen Benutzer wiedergegeben werden können. Die Ansteuerung der Anzeigeelemente erfolgt zyklisch wiederholend mit einer bestimmten Bildwiederholfrequenz von beispielsweise 25 Hz oder 50 Hz. Mit jeder Bildwiederholung wird jedes der Anzeigeelemente angesteuert, um ein optisches Signal auszugeben, welches zu der Wiedergabe der gespeicherten Daten beiträgt. Durch jedes der Anzeigeelemente wird also beispielsweise ein so genannter Pixel oder Subpixel realisiert.

Die Anzeigevorrichtung weist einen zeitlichen spektralen Verlauf des abgestrahlten Lichtes der Anzeigeelemente auf, welcher visuell von einem Beobachter nicht wahrgenommen werden kann. Besonders bevorzugt ist eine zeitliche Veränderung der spektralen Zusammensetzung des abgestrahlten Lichts, welche deutlich schneller als die Bildwiederholfrequenz, von typischer Weise 25 beziehungsweise 50 Hz ist.

Unter einem "zeitlichen spektralen Verlauf" wird in Ausführungsformen der Erfindung verstanden, dass sich das von einem Anzeigeelement abgegebene Strahlungsspektrum zeitlich ändert. Beispielsweise bleibt also das Strahlungsspektrum nach dem Einschalten eines Anzeigeelements nicht konstant, sondern verändert sich innerhalb einer Bildwiderholperiode. Entsprechendes gilt für das Ausschalten eines Anzeigeelements. Dadurch kann ein Sicherheitsmerkmal gegeben sein und/oder eine Information kodiert sein.

Bei den Anzeigeelementen, welche den erfindungsgemäßen zeitlichen spektralen Verlauf aufweisen, kann es sich zum Beispiel um schwarz/weiß-Pixel oder RGB-Subpixel handeln.

Die Detektion des zeitlichen spektralen Verlaufs der Anzeigeelemente hat insbesondere den Vorteil, dass damit die Nachstellung eines erfindungsgemäßen Dokuments erschwert wird. Zunächst erhält der Fälscher keine Kenntnis von der Tatsache, dass der zeitlich spektrale Verlauf, welcher visuell mit dem bloßen Auge nicht wahrnehmbar ist, als Sicherheitsmerkmal zur Verifikation des Dokumentes verwendet wird..

Ferner kann der zeitliche spektrale Verlauf sich verschiedenen Teilbereichen des Dokuments unterschiedlich sein, wodurch eine Nachstellung des Dokuments weiter erschwert wird, da ein Fälscher ja auch nicht wissen kann, wo sich welcher Teilbereich des Dokuments befinden soll.

Der zeitliche spektrale Verlauf kann in einer Ausführungsform gezielt variiert werden. So ist zum Beispiel von organischen Leuchtdioden (OLEDs) bekannt, dass durch das Ansteuerschema sich verschiedene zeitliche spektrale Verläufe einstellen lassen. Insbesondere ergeben sich unterschiedliche Verläufe für unterschiedliche Ströme und daraus resultierenden Helligkeiten.

Nach einer Ausführungsform der Erfindung handelt es sich bei der Anzeigevorrichtung um ein Aktiv-Matrix-Display, wobei jedem der Anzeigeelemente eine Aktivierungsschaltung zugeordnet ist. Bei dieser Ausführungsform können die Mittel zur Variation des zeitlich spektralen Verlaufs realisiert sein.

Nach einer Ausführungsform der Erfindung dienen Zeilenleitungen und/oder Spaltenleitungen zur Ansteuerung der Anzeigeelemente.

Verschiedene zeitliche spektrale Verläufe werden mittels verschiedener Materialien und insbesondere verschiedener Materialkombinationen realisiert. Dieses führt insbesondere bei farbigen Anzeigevorrichtungen dazu, dass wenigstens eine dieser Farbkomponenten einen erfindungsgemäßen zeitlichen spektralen Verlauf aufweist. Es können aber auch mehrere oder alle Farbkomponenten einen entsprechenden Verlauf aufeisen.

Nach einer Ausführungsform der Erfindung handelt es sich bei der in das Dokument integrierten Anzeigevorrichtung um ein Aktiv- oder Passiv-Matrixdisplay oder eine Segment-Anzeige.

Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Die in dem Dokument gespeicherten Daten können verschiedene Inhalte beinhalten, die zur Erzeugung einer Bildwiedergabe auf der Anzeigevorrichtung geeignet sind, das heißt, beispielsweise digitale Bildaufnahmen, insbesondere Gesichtsbilder einer Person, Wappen, Siegel, textuelle Angaben, Barcodes und dergleichen. In einer Ausführungsform des Dokuments als elektronisches Kennzeichen, insbesondere als elektronisches Kraftfahrzeugkennzeichen, können die Daten das Kennzeichen eines Fahrzeugs beinhalten.

Nach einer Ausführungsform der Erfindung handelt es sich bei der Information, die durch den zeitlichen spektralen Verlauf der Abgabe der optischen Signale von den Anzeigeelementen der Teilmenge ausgegeben wird, um eine Personalisierungsinformation, ein Sicherheitsmerkmal, einen kryptographischen Schlüssel, einen Fahrzeugparameter und/oder einen Gebührenstatus.

Bei den Personalisierungsinformationen kann es sich beispielsweise um Angaben bezüglich des Trägers des Dokuments handeln, wie zum Beispiel dessen Namen, Wohnort, Größe, Alter, Geschlecht, Gewicht und dergleichen. Diese Angaben können bei der Wiedergabe der gespeicherten Daten ganz oder teilweise im Klartext auf der Anzeigevorrichtung angezeigt werden.

Nach einer Ausführungsform der Erfindung handelt es sich bei der Information um ein Sicherheitsmerkmal, wie zum Beispiel ein Wappen, Siegel oder dergleichen.

Diese Information wird zum Beispiel durch die räumliche Anordnung der Bildelemente der Teilmenge ausgegeben.

Nach einer Ausführungsform der Erfindung handelt es sich bei der Information um einen kryptographischen Schlüssel. Bei dem kryptographischen Schlüssel kann es sich um einen symmetrischen oder um einen asymmetrischen Schlüssel handeln. Der kryptographische Schlüssel wird von einem Lesegerät erfasst, so dass das Lesegerät zusammen mit dem Dokument ein kryptographisches Protokoll ausführen kann.

Nach einer Ausführungsform der Erfindung handelt es sich bei der Information um einen Fahrzeugparameter und/oder einen Gebührenstatus des Kraftfahrzeugs. Das Dokument, insbesondere in der Ausführungsform als elektronisches Kraftfahrzeugkennzeichen, kann an dem Kraftfahrzeug oder einem Kraftfahrzeugteil befestigt sein.

Bei dem Fahrzeugparameter kann es sich z.B. um die Geschwindigkeit des Kraftfahrzeugs, einen Lärmpegel oder einen Abgaswert handeln. Insbesondere kann durch die Information ausgegeben werden, welche Schadstoffklasse das Kraftfahrzeug erfüllt, insbesondere gemäß der anwendbaren Feinstaubverordnung.

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Nach einer Ausführungsform der Erfindung hat das Dokument einen geschützten Speicherbereich, in dem weitere Daten gespeichert sind. Ferner hat das Dokument eine Schnittstelle für einen lesenden Zugriff des Lesegeräts auf diese weiteren Daten. Die Schnittstelle kann kontaktbehaftet oder kontaktlos, insbesondere als RFID-Schnittstelle ausgebildet sein. Ferner kann die Schnittstelle auch als so genanntes Dual Mode Interface ausgebildet sind. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Bedingung für einen Lesezugriff des Lesegeräts auf die weiteren Daten ist die zuvorige erfolgreiche Ausführung des kryptographischen Protokolls. Bei dem kryptographischen Protokoll kann es sich zum Beispiel um eine sogenannte Challenge-Response Verfahren handeln. Durch das kryptographische Protokoll werden die weiteren Daten gegen unerlaubte Zugriffe geschützt. Dies ist besonders vorteilhaft, wenn es sich bei den dritten Daten um sensitive Daten handelt, wie zum Beispiel biometrische Daten, insbesondere Fingerabdruckdaten oder Iris-Scandaten des Trägers des Dokuments.

Unter einem "Dokument" werden erfindungsgemäß unter anderem Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise, Gesundheitskarten oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird.

In einem weiteren Aspekt betrifft die Erfindung ein Lesegerät für ein Dokument. Das Lesegerät hat einen Sensor zur Erfassung des zeitlichen spektralen Verlaufes des von der Anzeigevorrichtung abgestrahlten Lichts sowie Decodiermittel zur Decodierung der über den zeitlichen spektralen Verlauf codierten Information.

Nach einer Ausführungsform der Erfindung ist das Lesegerät zur Verifikation des Dokuments mit Hilfe der Information ausgebildet. Beispielsweise vergleicht das Lesegerät die empfangene Information mit einer Referenz-Information. Eine hinreichende Übereinstimmung zwischen der empfangenen Information und der Referenzinformation ist eine Voraussetzung dafür, dass das Dokument als echt anerkannt wird.

Nach einer Ausführungsform der Erfindung hat das Lesegerät Mittel zur Ausführung des kryptographischen Protokolls mittels der empfangenen Information. Bei dieser Information handelt es sich beispielsweise um einen kryptographischen Schlüssel. Aufgrund der Erfassung des kryptographischen Schlüssels kann das Lesegerät mit dem Dokument das kryptographische Protokoll ausführen. Nach erfolgreicher Durchführung des kryptographischen Protokolls kann das Lesegerät auf einen geschützten Speicherbereich des Dokuments zugreifen, um von dort Daten auszulesen.

Nach einer Ausführungsform der Erfindung ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann z.B. zur Erfassung eines Fahrzeugparameters, eines Fahrparameters oder eines Gebührenstatus des Kraftfahrzeugs dienen, insbesondere zur Durchführung von Verkehrskontrollen, Abgaskontrollen und/oder Gebührenkontrollen

In einem weiteren Aspekt betrifft die Erfindung ein Verfahren zur Verifikation eines Dokuments. Zur Verifikation des Dokuments wird die von der Anzeigevorrichtung empfangene Information mit einer Referenzinformation verglichen.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Dokuments,
- Figur 2: ein Blockdiagramm einer weiteren Ausführungsform einer erfindungsgemäßen Dokuments,
- Figur 3: ein zeitlicher spektraler Verlauf,
- Figur 4: ein weiterer zeitlicher spektraler Verlauf,
- Figur 5: ein weiterer zeitlicher spektraler Verlauf,

Elemente der nachfolgenden Ausführungsformen, die einander entsprechen, sind mit denselben Bezugszeichen gekennzeichnet.

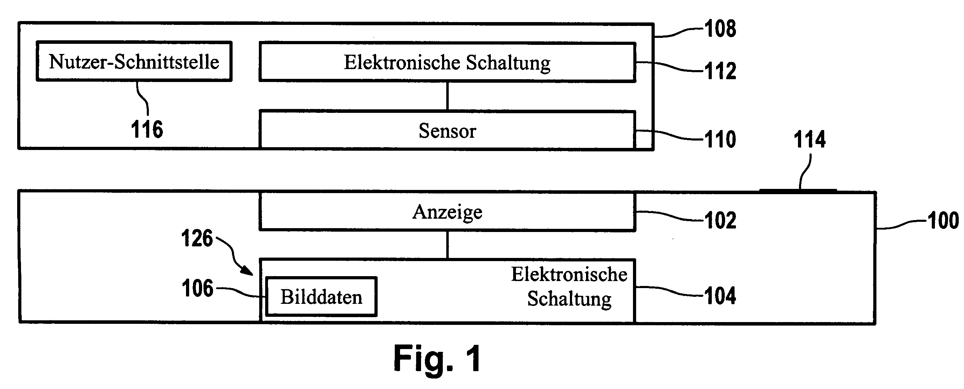

Die Figur 1 zeigt ein Dokument 100 mit einer in den Dokumentenkörper des Dokuments 100 integrierten Anzeige 102 und einer elektronischen Schaltung 104 zur Ansteuerung der Anzeige 102. Die Anzeige 102 beinhaltet eine Vielzahl von Anzeigeelementen, die beispielsweise matrixförmig angeordnet sein können. Insbesondere kann es sich bei der Anzeige 102 um eine Passiv- oder eine Aktiv-Matrixanzeige handeln.

Die elektronische Schaltung 104 beinhaltet einen oder mehrere elektronische Speicher 126 zur Speicherung insbesondere von Daten 106. Die elektronische Schaltung 104 kann auf die Daten 106 zugreifen. Insbesondere dient die elektronische Schaltung 104 zum Zugriff auf die Daten 106, um die Anzeige 102 zur Wiedergabe der Daten 106 anzusteuern, sodass ein Benutzer des Dokuments 100 die Wiedergabe der Daten 106 visuell wahrnehmen kann.

Bei den Daten 106 kann es sich zum Beispiel um Bilddaten handeln. Unter "Bilddaten" werden hier Daten verstanden, die sich zur Wiedergabe auf der Anzeige 102 eignen, d.h. zum Beispiel eine digitale Fotografie, textuelle Angaben, ein ein- oder zweidimensionaler Barcode, ein amtliches Kraftfahrzeugkennzeichen oder dergleichen.

Die elektronische Schaltung 104 ist so ausgebildet, dass während einer Bildwiederholperiode sämtliche der Anzeigeelemente der Anzeige 102 einmal angesteuert werden, um so die Daten 106 auf der Anzeige 102 wiederzugeben. Dies kann mit einer Bildwiederholfrequenz von zum Beispiel 25 Hz oder 50 Hz erfolgen.

Ein jedes der Anzeigeelemente der Anzeige 102 ist zur Abgabe eines optischen Signals ausgebildet. Durch Ansteuerung der Anzeigeelemente durch die elektronische Schaltung 104 werden die in dem Dokument gespeicherten Daten 106 wiedergegeben, sodass sie ein Benutzer visuell wahrnehmen kann. Dies erfolgt beispielsweise so, dass innerhalb einer Bildwiederholperiode die Anzeigeelemente zeilenweise angesteuert werden, um so innerhalb einer Bildwiederholperiode ein Vollbild auf der Anzeige 102 aufzubauen.

Die Anzeige 102 ist so ausgebildet, dass über den variierbaren zeitlichen spektralen Verlauf des abgestrahlten Lichtes eine Information codiert übertragen werden kann. Über den zeitlichen und/oder räumlichen Verlauf der Variation des zeitlichen spektralen Verlaufes der Anzeigeelemente auf der Anzeige 102 kann eine Information in der Anzeige 102 codiert sein.

Das Lesegerät 108 hat einen optischen Sensor 110, wie zum Beispiel einen CCD-Sensor oder einen optischen Scanner. Der Sensor 110 ist dazu ausgebildet, die von den Anzeigeelementen der Anzeige 102 abgegebenen optischen Signale zu erfassen. Der Sensor 110 kann in einer anderen erfindungsgemäßen Ausführungsform aus einem oder mehreren Halbleiterdetektoren, zum Beispiel Phototransistoren, Photodioden (insbesondere Avalanche-Photodioden) oder Photowiderständen, oder Sekundärelektronenvervielfachern (Photomultiplier, PMT) bestehen, welcher die zeitaufgelöste Detektion ermöglicht. Ein weiterer Bestandteil des Sensors 110 kann ein oder mehrere Filter, ein dispersives Element (zum Beispiel Prisma) und/oder diffraktives Element (zum Beispiel Gitter) beinhalten, um einen oder mehrere spektrale Bereiche zu selektieren. Zum Beispiel kann eine Photodiode eingesetzt werden, welche Licht bei 520 nm detektiert und eine zweite, welche Licht bei 620 nm detektiert. Es kann auch eine Kombination von Sensoren 110, insbesondere PMTs, eingesetzt werden, welche bei gleicher Wellenlänge, aber mit unterschiedlichen Startdetektierzeitpunkten messen.

Der Sensor 110 kann zum Beispiel auf die Detektion von UV-, sichtbaren und/oder IR-Licht ausgebildet sein. Das detektierte Licht kann in einer Ausführungsform von der Anzeigevorrichtung emittiert worden sein. In einer weiteren Ausführungsform verfügt das Lesegerät über eine Beleuchtungsquelle, welche das Dokument bestrahlt. Das Dokument kann diese Strahlung in unveränderter oder veränderter Form wieder abgeben. Der Sensor kann somit die Transmission, Emission oder Reflexion messtechnisch erfassen. Bei der Beleuchtungsquelle kann es sich um einen thermischen Emitter (zum Beispiel Glühlampe, Nernst-Stift), eine LED (anorganisch, organisch oder Hybrid), einen Laser, eine Gasentladungslampe (zum Beispiel Kaltkathodenlampe, Natriumdampflampe) oder eine Kombination dieser handeln. Diese können mit einem Filter, einem dispersiven Element (zum Beispiel Prisma) und/oder diffraktiven Element (zum Beispiel Gitter) versehen sein, um einen spektralen Bereich zu selektieren. Bevorzugt sind einzelne Wellenlängen, Wellenlängenbereiche oder kontinuierliche Spektren zwischen 190 nm und 2500 nm, bevorzugt zwischen 250 nm und 1250 nm.

Der Sensor 110 ist mit einer elektronischen Schaltung 112 des Lesegeräts 108 verbunden. Durch die elektronische Schaltung 112 werden die durch den Sensor 110 erfassten optischen Signale ausgewertet, um den zeitlichen spektralen Verlauf zu erfassen, mit der die Anzeigeelemente die optischen Signale abgeben. Die elektronische Schaltung 112 kann einen Decoder beinhalten, um die Information aus den zeitlich spektralen Verlauf und/oder aus der Anordnung der Anzeigeelemente der Teilmenge, welche die einen bestimmten zeitlichen spektralen Verlauf aufweisenden optischen Signale abgegeben haben, zu decodieren. In der elektronischen Schaltung 112 kann eine Referenz-Information gespeichert sein.

Ferner hat das Lesegerät 108 eine Nutzerschnittstelle 116. Alternativ oder zusätzlich kann das Lesegerät 108 auch eine Schnittstelle zu einem Computer und/oder einem Netzwerk aufweisen.

Das Lesegerät 108 kann mit einem Sensor 110 die Wiedergabe der Anzeige 102 erfassen. Dies kann permanent erfolgen, sodass das Lesegerät 108 also ständig die von der Anzeigevorrichtung 102 erzeugte Wiedergabe optisch sensiert. Hierzu ist der Sensor 110 beispielsweise als Hochgeschwindigkeitskamera ausgebildet.

Beispielsweise handelt es sich bei der erfassten Information um eine Personalisierungsinformation. Diese Personalisierungsinformation kann auf dem Dokument 100 als Aufdruck 114 im Klartext angegeben sein. Durch Vergleich der über die Nutzerschnittstelle 116 ausgegebenen Personalisierungsinformation mit der auf dem Aufdruck 114 des Dokuments 100 angegebenen Personalisierungsinformationen kann also eine Prüfung der Echtheit des Dokuments erfolgen, da die aus dem zeitlichen spektralen Verlauf der von den Anzeigeelementen der Teilmenge optisch von dem Sensor 110 erfassten Personalisierungsinformation, die über die Schnittstelle 116 des Lesegeräts 108 ausgegeben wird, mit der auf dem Aufdruck 114 gezeigten Personalisierungsinformation übereinstimmen muss.

Bei der Information kann es sich auch um ein Wappen, Siegel oder ein anderes Sicherheitsmerkmal handeln. Die Wiedergabe dieses Sicherheitsmerkmals wird von dem Sensor 110 des Lesegeräts 108 erfasst und durch die elektronische Schaltung 112 mit der dort gespeicherten Referenz-Information verglichen. Wenn das optisch erfasste Sicherheitsmerkmal mit der Referenz-Information hinreichend übereinstimmt, wird über die Nutzerschnittstelle 116 ein akustisches oder optisches Signal ausgegeben, welches anzeigt, ob das Dokument 100 die Echtheitsprüfung bestanden hat oder nicht.

Beispielsweise geben alle Anzeigeelemente der Teilmenge deren jeweiligen optischen Signale innerhalb einer Bildwiederholperiode mit demselben zeitlichen spektralen Verlauf ab. In diesem Fall kann durch die räumliche Anordnung der Anzeigeelemente der Teilmenge auf der Anzeige 102 das Sicherheitsmerkmal gebildet werden.

Die elektronische Schaltung 104 kann auch so ausgebildet sein, dass sie unmittelbar vor einer Bildwiederholperiode ein Trigger-Signal abgibt, welches beispielsweise drahtlos oder optisch zu der elektronischen Schaltung 112 des Lesegeräts 108 übertragen wird. Erst aufgrund dieses Trigger-Signals startet die elektronische Schaltung 112 die optische Erfassung der Wiedergabe der Anzeige 102 mit Hilfe des Sensors 110, um die von den Anzeigeelementen der Anzeige 102 während der nachfolgenden Bildwiederholperiode abgegebenen optischen Signale zu erfassen. Der Sensor 110 kann bei dieser Ausführungsform beispielsweise als time-gated Sensor ausgebildet sein, insbesondere als time-gated CCD-Kamera.

Alternativ kann das Lesegerät 108 so ausgebildet sein, dass es dieses Trigger-Signal für das Dokument 100 erzeugt. In diesem Fall wird das Trigger-Signal beispielsweise drahtlos von der elektronischen Schaltung 112 an die elektronische Schaltung 104 übertragen. Daraufhin wird von der elektronischen Schaltung 104 eine Bildwiederholperiode gestartet, innerhalb derer ein Vollbild zur Wiedergabe der Daten 106 aufgebaut wird. Ferner wird durch das Trigger-Signal in dem Lesegerät 108 von der elektronischen Schaltung 112 die optische Erfassung der Wiedergabe der Anzeige 102 durch den Sensor 110 gestartet.

Bei der Information, die von der elektronischen Schaltung 104 über die Anzeige 102 durch die verschiedenen zeitlichen spektralen Verläufe der optischen Signale ausgegeben wird, kann es sich auch um einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet.

Beispielsweise kann die elektronische Schaltung 104 eine Schnittstelle zu einem Kraftfahrzeug-Elektronikgerät aufweisen, welches die auszugebende Information an die Schnittstelle der elektronischen Schaltung 104 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Information zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 104 übertragen, sodass der Abgaswert über die Anzeige 102 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 ausgegeben, sodass diese Information über die Anzeige 102 ausgegeben wird.

Dementsprechend kann das Lesegerät 108 zur Erfassung der Information, die über die Anzeige 102 ausgegeben wird, von dem stehenden und/oder von dem fahrenden Kraftfahrzeug ausgebildet sein. Das Lesegerät 108 kann über ein Netzwerk mit einem zentralen Servercomputer verbunden sein, in dem die von der Anzeige 102 erfasste Information ausgewertet wird.

Bei den Daten 106 kann es sich hier um das amtliche Kraftfahrzeug-Kennzeichen handeln. Auf der Anzeige 102 wird also visuell sichtbar das amtliche KraftfahrzeugKennzeichen ausgegeben sowie zusätzlich eine oder mehrere weitere Informationen, die visuell ohne ein Lesegerät nicht wahrnehmbar sind. Bei dieser Ausführungsform kann eine Aktualisierung des amtlichen Kennzeichens dadurch erfolgen, dass eine Aktualisierung der Daten 106 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 104 gesendet werden, welches die Daten 106 dann mit den empfangenen Daten überschreibt

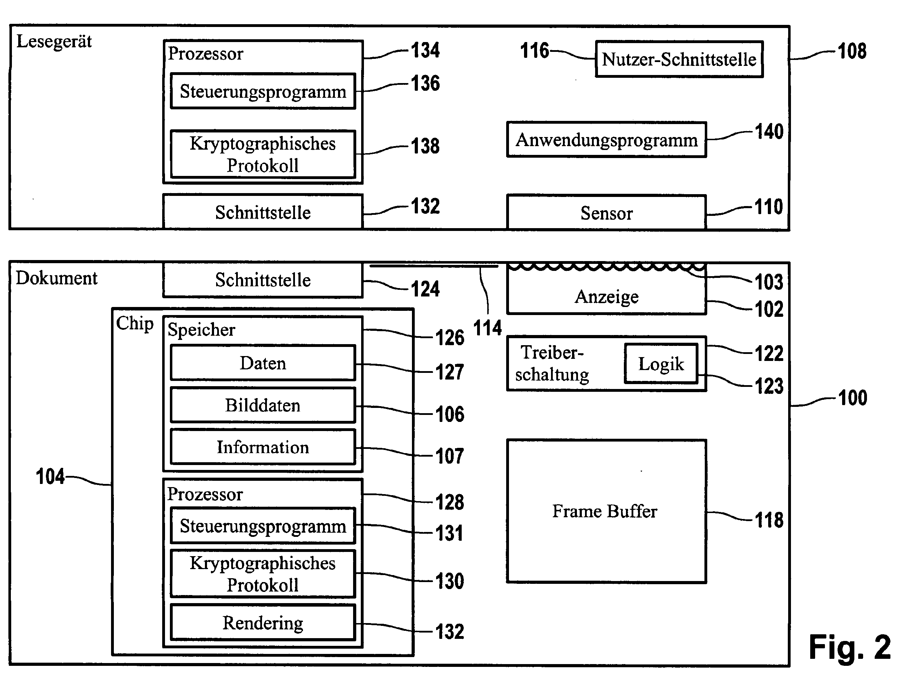

Die Figur 2 zeigt eine weitere Ausführungsform eines erfindungsgemäßen Dokuments 100 und eines erfindungsgemäßen Lesegeräts 108.

Die elektronische Schaltung 104 des Dokuments 100 ist hier als Chip, insbesondere als RFID-Chip, ausgebildet. Die elektronische Schaltung 104 ist mit einer Schnittstelle 124 des Dokuments 100 zur Kommunikation mit dem Lesegerät 108 verbunden. Die Schnittstelle 124 kann beispielsweise ein oder mehrere Antennenwindungen, die in einem Randbereich des Dokuments 100 verlaufen, aufweisen.

Die Schaltung 104 hat einen elektronischen Speicher 126 zur Speicherung von schutzbedürftigen Daten 127. Bei den schutzbedürftigen Daten 127 kann es sich beispielsweise um biometrische Daten des Trägers des Dokuments 100, wie zum Beispiel Fingerabdruckdaten, Iris-Scandaten oder dergleichen handeln. Die schutzbedürftigen Daten 127 sind in einem besonders geschützten Speicherbereich des Speichers 126 gespeichert.

Ferner sind in demselben Speicher 126 oder einem anderen elektronischen Speicher des Dokuments 100 die Daten 106 und die Information 107 gespeichert. Die Schaltung 104 hat ferner einen Prozessor 128 zur Ausführung von Programminstruktionen 130, durch die die das Dokument 100 betreffenden Schritte eines kryptographischen Protokolls implementiert werden. Der Prozessor 128 dient ferner zur Ausführung von Programminstruktionen 131, die ein Steuerungsprogramm implementieren.

Das Lesegerät 108 hat einen optischen Sensor 110 zur Erfassung der von den Anzeigeelementen 103 (vgl. Fig.2) der Anzeige 102 abgestrahlten optischen Signale. Bei dem optischen Sensor 110 kann es sich um einen CCD-Sensor oder einen Scanner handeln.

Das Lesegerät 108 hat ferner eine Schnittstelle 132, die der Schnittstelle 124 des Dokuments 100 entspricht. Beispielsweise ist also die Schnittstelle 132 für eine RFID-Kommunikation mit dem Dokument 100 bzw. dessen Schaltung 104 ausgebildet. Die Schnittstellen 124, 132 können kontaktbehaftet, kontaktlos oder als so genanntes Dual-Mode-Interface ausgebildet sein. Die Schnittstellen 124, 132 können auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Das Dokument 108 hat zumindest einen Prozessor 134 zur Ausführung eines Steuerungsprogramms 136 sowie von Programminstruktionen 138, durch die die das Lesegerät 108 betreffenden Schritte des kryptographischen Protokolls implementiert werden. Das Lesegerät 108 kann ferner zur Ausführung eines Anwendungsprogramms 140 dienen. Das Anwendungsprogramm 140 kann auch von einem anderen Computersystem ausgeführt werden, welches mit dem Lesegerät 108 verbunden ist.

Das durch die Programminstruktionen 131 implementierte Steuerungsprogramm des Dokuments 100 ist so ausgebildet, dass es die Treiberschaltung 122 zur Wiedergabe der Daten 106 ansteuert. Der zeitliche spektralen Verlauf ist fest vorgegeben, wobei die Kodierung der Information über die Auswahl der Anzeigeelemente erfolgt, die innerhalb einer Bildwiderholperiode angesteuert werden.

Zum Zugriff auf die Daten 127 des Speichers 126 erfasst das Lesegerät 108 zunächst mittels seines optischen Sensors 110 die Anzeige 102. Hierzu wird der Sensor 110 entsprechend von dem Steuerungsprogramm 136 angesteuert. Das Steuerungsprogramm 136 decodiert die in den zeitlichen spektralen Verlauf und/oder der Anordnung der Anzeigeelemente 103 der Teilmenge codierte Information, um so die Information zu empfangen. Auf diese Art und Weise erhält das Steuerungsprogramm 136 Kenntnis des kryptographischen Schlüssels.

Nach der Erfassung des kryptographischen Schlüssels startet das Steuerungsprogramm 136 die Ausführung der Programminstruktionen 138, so dass das kryptographische Protokoll zwischen dem Lesegerät 108 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen, dass das Lesegerät 108 zunächst eine Anforderung der Daten 127 an die Schnittstelle 124 des Dokuments 100 sendet. Daraufhin wird die Ausführung der Programminstruktionen 130 gestartet. Hierdurch wird seitens des Dokuments 100 z. B. eine Zufallszahl generiert, die mit einem Referenzwert des kryptographischen Schlüssels symmetrisch verschlüsselt wird, so dass ein Chiffrat resultiert. Die verschlüsselte Zufallszahl, d.h. das Chiffrat, wird von der Schnittstelle 124 des Dokuments 100 an die Schnittstelle 132 des Lesegeräts 108 gesendet.

Durch Ausführung der Programminstruktionen 138 wird seitens des Lesegeräts 108 das von dem Dokument 100 empfangene Chiffrat mit Hilfe des zuvor empfangenen kryptographischen Schlüssels entschlüsselt. Das Resultat der Entschlüsselung wird von der Schnittstelle 132 an die Schnittstelle 124 des Dokuments 100 gesendet.

Mit Hilfe der Programminstruktionen 130 wird dann seitens des Dokuments 100 geprüft, ob das Ergebnis der Entschlüsselung des Chiffrats, welche das Dokument von dem Lesegerät 108 empfangen hat, identisch ist mit der initial durch das Dokument 100 erzeugten Zufallszahl. Wenn dies der Fall ist, stimmt der Referenzwert des kryptographischen Schlüssels, der in den Programminstruktionen 130 beinhaltet ist, oder auf den diese zugreifen können, mit dem aus der Bildwiedergabe der Anzeige 102 durch das Lesegerät 108 erfassten kryptographischen Schlüssel überein, wodurch die Authentizität des Dokuments 100 und die Zugriffsberechtigung des Lesegeräts 108 gegeben ist.

Das Dokument 100 überträgt daraufhin die von dem Lesegerät 108 angeforderten Daten 127 des Speichers 126 von der Schnittstelle 124 zu der Schnittstelle 132. Diese Daten können von dem Steuerungsprogramm 136 an das Anwendungsprogramm 140 für eine Weiterverarbeitung übertragen werden. Beispielsweise werden die Daten auf einer Bildschirmmaske ausgegeben.

Bevor die Daten aus dem Speicher 126 an das Lesegerät 108 übertragen werden, können weitere Überprüfungen erforderlich sein, wie z.B. nach einem EAC Verfahren. Alternativ oder zusätzlich kann auch ein kryptographisches Protokoll basierend auf einem asymmetrischen Schlüssel zum Einsatz kommen.

Die elektronische Schaltung 104 des Dokuments 100 ist hier als Chip, insbesondere als RFID-Chip, ausgebildet. Die elektronische Schaltung 104 beinhaltet eine Treiberschaltung 122 zur Ansteuerung der Anzeige 102. Hierzu beinhaltet die Treiberschaltung 122 eine Treiberlogik 123.

Die elektronische Schaltung 104 hat ferner einen Prozessor 128 zur Ausführung von Programminstruktionen 131, die ein Steuerungsprogramm implementieren, sowie zur Ausführung von Programminstruktionen 132, die zur Decodierung der Daten 106 dienen. Diese Decodierung wird auch als "Rendering" bezeichnet. Beispielsweise liegen die Daten 106 in einem standardisierten Datenformat codiert vor, d.h. beispielsweise im Format JPEG, GIF oder TIFF. Durch die Programminstruktionen 131 können die Daten 106 decodiert werden.

Die elektronische Schaltung 104 hat ferner einen Pufferspeicher 118, beispielsweise einen sogenannten frame buffer.

Der zeitliche spektrale Verlauf ist auf der Ebene der Anzeigeelemente 103 implementiert. Jedes der Anzeigeelemente 103 hat eine Ansprechcharakteristik, d.h. eine Übertragungsfunktion, die den zeitlichen spektralen Verlauf der Abgabe eines optischen Signals bei Ansteuerung dieses Anzeigeelements 103 angibt. Die Anzeigeelemente 103 der Teilmenge sind so ausgebildet, dass sie ein Ansprechverhalten aufweisen, welches von dem Ansprechverhalten der übrigen Anzeigeelemente 103 der Anzeige 102 abweicht. Dieses Ansprechverhalten ist verändert, wodurch sich das zeitliche spektrale Verhalten der Abgabe der optischen Signale von diesen Anzeigeelementen 103 der Teilmenge ergibt.

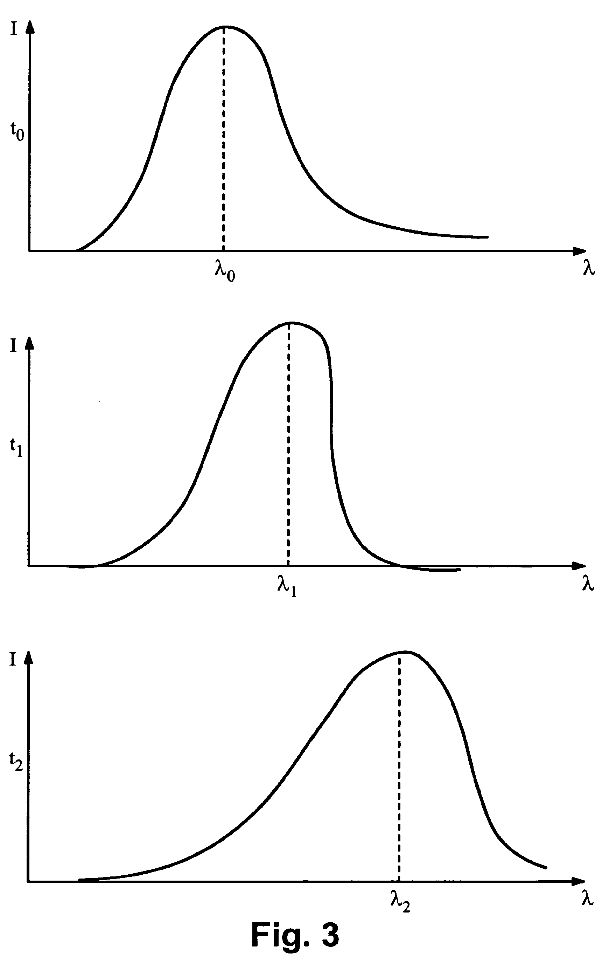

In Fig.3 ist ein zeitlich spektraler Verlauf einer Emission zum Beispiel einer OLED schematisch dargestellt. Zum Zeitpunkt t₀ liegt das Maximum bei einer Wellenlänge λ₀. Zum späteren Zeitpunkt t₁ hat sich der spektrale Verlauf verschoben, sodass das Maximum bei λ₁ liegt und in diesem Falle zu höheren Wellenlängen verschoben. Zu einem noch späteren Zeitpunkt t₂ ist das Maximum bis zu λ₂ verschoben. Die Verschiebung ist bevorzugt in nicht wahrnehmbaren Bereich, zum Beispiel kann λ₀ = 620 nm, λ₁ = 620,5 nm und λ₂ = 621 nm sein. Die Verschiebung ist maschinell erfassbar und auswertbar. Der Zeitunterschied zwischen t₀, 1₁ und t₂ ist kleiner 40 ms, bevorzugt kleiner 2 ms, besonders bevorzugt kleiner 10 µs.

Die Variation der Lebensdauern kann über Verwendung verschiedener Materialien, zum Beispiel verschiedene Wirtsgittersysteme, räumliche Anordnung z.B. in Typ II Halbleitern oder bei intramolekularen Energietransfer (FRET, insbesondere spFRET) erfolgen. Weitere Variationsmöglichkeiten ergeben sich durch gezielte chemische Dotierungen von Polymeren mit Metallen.

Bei Verwendung von emissiven Anzeigevorrichtungen, insbesondere OLEDs, können verschiedene Emittermaterialien durchaus ein ähnliches oder sogar Identisches Emissionsspektrum aufweisen und sich trotzdem in ihrem zeitlichen Lumineszenzverhalten deutlich unterscheiden. Je nach Lebensdauer des angeregten Zustandes unterscheidet man zwischen Fluoreszenz und Phosphoreszenz. Fluoreszente Materialien haben Lebensdauern < 10⁻⁶ s und phosphoreszente Materialien von > 10⁻⁶ s.

Von den gängigen OLED Materialien besitzen insbesondere die sogenannten Triplett Materialien das Potential, gleichzeitig als Sicherheitsfeature eingesetzt zu werden. Diese Materialien zeichnen sich durch Ihre Phosphoreszenz aus. Sie unterscheidet sich im wesendlichen hinsichtlich der Fluoreszenz durch um Größenordnungen längere Lebensdauern des angeregten Zustandes. Während der Übergang des angeregten Zustandes zum Grundzustand in der Phosphoreszenz als verboten bezeichnet wird (der sogenannte Triplettzustand), ist er in der Fluoreszenz erlaubt (der Singulettzustand).

Aus dem Stand der Technik sind eine Vielzahl an sogenannten Triplett-OLED-Materialien bekannt. Insbesondere Derivate von Poly(p-Phenylen-Vinylen) (PPV) sind geeignet. Weitere Materieline sind z.B. Triphenylamin dimer, N,N'-bis(3 methylphenyl)-N,N'-bis(phenyl)-benzidine (TPD), fac tris(2-phenylpyridine) iridium (Ir(ppy)₃) doped TPD, and platinum octaethyl porphine (PtOEP) doped TPD (Tsuboi, Taiju; Murayama, Hideyuki; Penzkofer, Alfons (2006) Photoluminescence Characteristics of Ir(ppy)3 and PtOEP doped in TPD Host Material. Thin Solid Films, 499 (1-2). pp. 306-312. ISSN 0040-6090).

Der zeitliche spektrale Verlauf spielt im Stand der Technik bei OLEDs nur insofern eine Rolle, als das die Materialien für bestimmte Anwendungen (z.B. TV) nicht zu langsam abklingen sollen (Nachleuchten) und das der zeitlich integrale spektrale Verlauf konstant ist. Im Unterschied hierzu kann erfindungsgemäß über den zeitlich spektralen Verlauf eine Information und/oder ein Sicherheitsmerkmal codiert werden

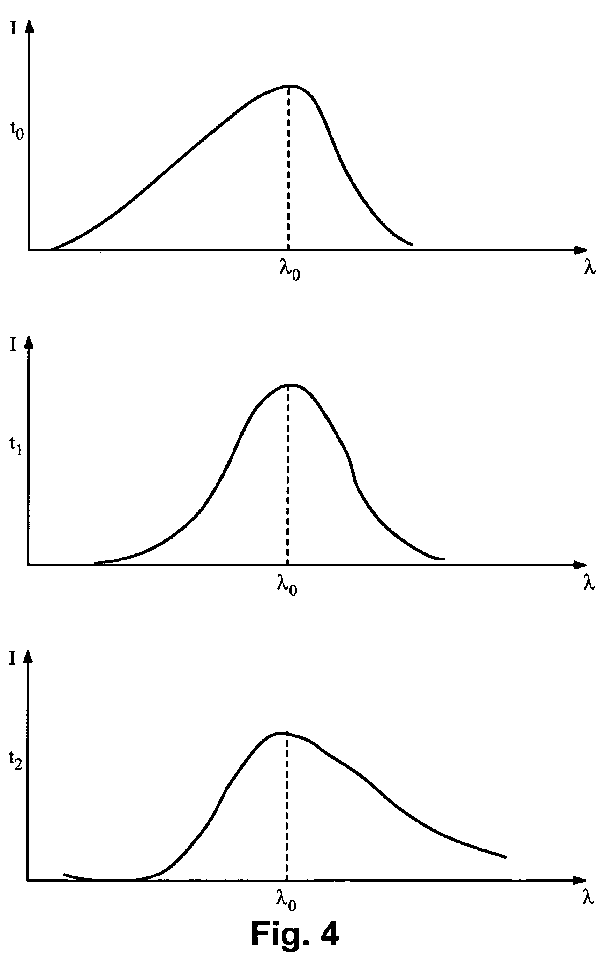

In Fig. 4 ist ein weiterer zeitlicher spektraler Verlauf dargestellt. Das Maximum λ₀ bleibt (im Rahmen des Messgenauigkeit) konstant, der spektrale Verlauf ändert sich jedoch mit der Zeit. So ist in dem hier gezeigten Beispiel zunächst eine kurzwellige Schulter bei t₀ zu sehen, welche geringer wird, wohingegen eine langwellige Schulter sich ausbildet.

Besonders bevorzugt erfolgt die Auswertung über zwei Sensoren, welche λ₀ + Δλ und λ₀ - Δλ detektieren. Der zeitliche Verlauf kann über das Verhältnis ermittelt werden.

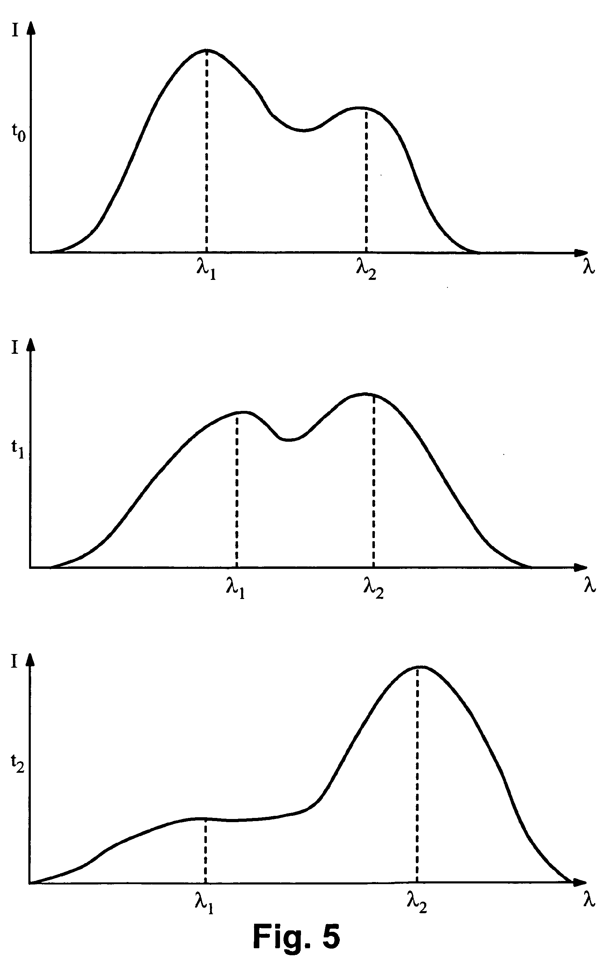

In Fig. 5 ist ein weiterer zeitlicher spektraler Verlauf. Hierbei sind im Material zum Beispiel zwei Komponenten enthalten, welche die Emissionsmaxima bei den Wellenlängen λ₁ und λ₂ aufweisen. Das Verhältnis zwischen den beiden Maxima verändert sich von t₀ über t₁ zu t₂.

Des Weiteren kann sich sowohl die Lage als auch die Verhältnisse der Maxima ändern, sodass sich eine Kombination der Figuren 3 bis 5 ergibt.

Die Intensität eines Maximums kann sich im zeitlichen Verlauf sowohl verringern als auch erhöhen.

### Bezugszeichenliste

- 100: Dokument
- 102: Anzeige
- 103: Anzeigeelement
- 106: Daten
- 107: Informationen
- 108: Lesegerät
- 110: Sensor
- 112: Schaltung
- 114: Aufdruck
- 116: Nutzerschnittstelle
- 118: Pufferspeicher
- 122: Treiberschaltung
- 123: Treiberlogik
- 124: Schnittstelle
- 126: Speicher
- 127: Daten
- 130: Programminstruktionen
- 131: Programminstruktionen
- 132: Programminstruktionen
- 134: Prozessor
- 136: Steuerungsprogramm
- 138: Programminstruktionen

## Patentansprüche

1. Dokument mit einer integrierten Anzeigevorrichtung (102), die mehrere ansteuerbare Anzeigeelemente (103) aufweist, wobei jedes der Anzeigeelemente zur Abgabe eines optischen Signals für eine Wiedergabe von in dem Dokument gespeicherten ersten Daten (106) ausgebildet ist, wobei die Anzeigevorrichtung zur zyklischen Ansteuerung der Anzeigeelemente zur Wiedergabe der ersten Daten in aufeinander folgenden Bildwiederholperioden ausgebildet ist, und wobei die Anzeigevorrichtung so ausgebildet ist, dass die Abgabe der optischen Signale zumindest einer Teilmenge der Anzeigeelemente mit einem zeitlichen spektralen Verlauf erfolgt, wobei der zeitliche spektrale Verlauf visuell nicht wahrnehmbar ist, wobei die Anzeigeelemente einen Leuchtstoff zur Erzeugung des optischen Signals aufweisen, und wobei die Anzeigeelemente einer Teilmenge einen ersten Wirtskristall für den Leuchtstoff aufweisen und wobei die übrigen Anzeigeelemente, die nicht zu der Teilmenge gehören, einen zweiten Wirtskristall zur Aufnahme des Leuchtstoffs aufweisen, wobei die ersten und zweiten Wirtskristalle unterschiedlich sind wobei die Anzeigeelemente der Teilmenge ein Ansprechverhalten haben, das sich vom Ansprechverhalten der übrigen Anzeigeelemente unterscheidet, und was zur Variation des zeitlichen spektralen Verlaufes führt, wobei es sich bei dem Dokument um ein Papier basiertes und/oder Kunststoff basiertes Dokument handelt, wie zum Beispiel ein Ausweisdokument, insbesondere einen Reisepass, Personalausweis, Visum, Führerschein, Fahrzeugschein, Fahrzeugbrief, Firmenausweis, Gesundheitskarte oder ein anderes ID-Dokument, oder um eine Chipkarte, ein Zahlungsmittel, insbesondere eine Bankkarte oder Kreditkarte, einen Frachtbrief oder einen sonstige Berechtigungsnachweis, oder um ein elektronisches Kennzeichen, insbesondere um ein elektronisches Kraftfahrzeugkennzeichen.

2. Dokument nach einem der vorhergehenden Ansprüche, wobei im zeitlichen spektralen Verlauf eine Information codiert ist und/oder wobei in der Anordnung der Anzeigeelemente der Teilmenge eine Information codiert ist.

3. Dokument nach einem der vorhergehenden Ansprüche, mit Mitteln (123; 142, 144) zur Variation des zeitlichen spektralen Verlaufes der Ansteuerung der zu der Teilmenge gehörenden Anzeigeelemente.

4. Dokument nach Anspruch 3, mit einer Treiberschaltung (122) zur Ansteuerung der Anzeigeelemente, wobei die Treiberschaltung Mittel (123) zur Variation des zeitlichen spektralen Verlaufes der Ansteuerung der zu der Teilmenge gehörenden Anzeigeelemente aufweist.

5. Dokument nach einem der vorhergehenden Ansprüche, wobei die Anzeigeelemente in einer Aktiv-Matrix angeordnet sind, wobei jedem der Anzeigeelemente eine Aktivierungsschaltung zugeordnet ist, und wobei die Aktivierungsschaltungen der zu der Teilmenge gehörenden Anzeigeelemente Mittel zur Variation des zeitlichen spektralen Verlaufes der Ansteuerung beinhalten.

6. Dokument nach einem der vorhergehenden Ansprüche, wobei die Anzeigevorrichtung einen Bereich aufweist, in dem keine Anzeigeelemente der Teilmenge angeordnet sind.

7. Dokument nach einem der vorhergehenden Ansprüche, wobei das Dokument einen integrierten elektronischen Schaltkreis (104) und einen Speicher (126) zur Speicherung von schutzbedürftigen Daten (127) und Mitteln (130) zur Ausführung eines kryptographischen Protokolls beinhaltet, und mit einer Schnittstelle (124) zu einem Lesegerät (108), wobei ein Zugriff des Lesegeräts auf die schutzbedürftigen Daten über die Schnittstelle die Ausführung des kryptographischen Protokolls mit Hilfe der Information voraussetzt.

8. Dokument nach einem der vorhergehenden Ansprüche, wobei es sich bei den ersten Daten (106) um ein Kennzeichen eines Fahrzeugs handelt, und wobei durch den zeitlichen spektralen Verlauf eine Information (107) ausgegeben wird.

9. Lesegerät mit einem Dokument nach einem der vorhergehenden Ansprüche, mit einem optischen Sensor (110) zur Erfassung des zeitlichen spektralen Verlaufes der optischen Signale von der Teilmenge der Anzeigeelemente.

10. Lesegerät nach Anspruch 9, wobei die Erfassung der zeitlichen Verzögerung durch Erfassung eines zeitaufgelösten Intensitätsprofils der von den Anzeigelementen abgegeben Strahlung erfolgt.

11. Lesegerät nach einem der vorhergehenden Ansprüche 9 oder 10, mit Mitteln (138) zur Ausführung eines kryptographischen Protokolls und einer Schnittstelle (132) zur Kommunikation mit dem Dokument, wobei ein Zugriff auf die schutzbedürftigen Daten (127) des Dokuments voraussetzt, dass das kryptographische Protokoll mit Hilfe einer aus der zeitlichen Verzögerung erfassten Information erfolgreich durchgeführt worden ist und/oder mit Mitteln zur Beleuchtung des erfindungsgemäßen Dokuments, wobei die Beleuchtungsquelle ausgewählt sein kann aus der Liste thermischer Emitter (zum Beispiel Glühlampe, Nernst-Stift), eine LED (anorganisch, organisch oder Hybrid), Laser, Gasentladungslampe (zum Beispiel Kaltkathodenlampe, Natriumdampflampe) oder eine Kombination dieser.

12. Verfahren zur Verifikation eines Dokuments nach einem der Ansprüche 1 bis 8, mit folgenden Schritten:
- Erfassung des zeitlichen spektralen Verlaufes der optischen Signale von den Anzeigeelementen der Teilmenge in einer Bildwiederholperiode,
- Überprüfung einer Referenz-Information mit Hilfe des zeitlichen spektralen Verlaufes,
- wobei insbesondere eine Decodierung einer Information aus dem zeitlichen spektralen Verlauf und/oder der Anordnung der Anzeigelemente der Teilmenge erfolgt, und mit einem Vergleich der Information mit einer Referenz-Information.

## Claims

1. A document with an integrated display device (102) that has multiple actuable display elements (103), wherein each display element is designed to emit an optical signal to represent first data (106) stored in the document, the display device being designed for cyclic actuation of the display elements to represent the first data at successive image refresh periods, and wherein the display device is designed so that the optical signals of at least a subset of the display elements are emitted with a spectral time course that is visually imperceptible, the display elements having a phosphor to produce the optical signal, and the display elements of a subset having a first host crystal for the phosphor and the other display elements that do not belong to the subset having a second host crystal to hold the phosphor, the first and second host crystals being different, the display elements of the subset having a response behavior that differs from that of the other display elements, and which leads to variation of the spectral time course, the document being a paper-based and/or plastic-based document, such as, for example, an identity document, in particular a passport, an identity card, a visa, a driver's license, a vehicle registration certificate, a vehicle title, a company ID, a health insurance card, or another ID document, or a smart card, a means of payment, in particular a bank card or a credit card, a waybill or another credential, or an electronic identification, in particular an electronic vehicle license plate.

2. The document described in one of the preceding claims, wherein a piece of information is encoded in the spectral time course and/or wherein a subset of the information is encoded in the arrangement of the display elements of the subset.

3. The document described in one of the preceding claims with means (123, 142, 144) to vary the spectral time course of the actuation of the display elements belonging to the subset.

4. The document described in claim 3 with a driver circuit (122) to actuate the display elements, wherein the driver circuit has means (123) to vary the spectral time course of the actuation of the display elements belonging to the subset.

5. The document described in one of the preceding claims, wherein the display elements are arranged in an active matrix, each of the display elements being associated with an activation circuit, and the activation circuits of the display elements belonging to the subset comprising means to vary the spectral time course of the actuation.

6. The document described in one of the preceding claims, wherein the display device has an area in which no display elements of the subset are arranged,

7. The document described in one of the preceding claims, wherein the document comprises an integrated electronic circuit (104) and a memory (128) to store data in need of protection (127) and means (130) of executing a cryptographic protocol, and with an interface (124) to a reader (108), the reader's access to the data in need of protection through the interface presuming the execution of the cryptographic protocol with the help of the information.

8. The document described in one of the preceding claims, wherein the first data (106) is a vehicle license plate, and wherein information (107) is output by the spectral time course.

9. A reader with a document described in one of the preceding claims, with an optical sensor (110) to capture the spectral time course of the optical signals from the subset of the display elements.

10. The reader described in claim 9, wherein the time delay is captured by capturing a time-resolved intensity profile of the radiation emitted by the display elements.

11. The reader described in one of the preceding claims 9 or 10, with means (138) to execute a cryptographic protocol and an interface (132) for communicating with the document, access to the data in need of protection (127) of the document presuming that the cryptographic protocol has been successfully executed with the help of information captured from the time delay, and/or with means of illumination of the inventive document, it being possible to select the source of illumination from the list of thermal emitters (for example an incandescent bulb, a Nernst lamp), an LED (inorganic, organic, or hybrid), laser, gas-discharge lamp (for example, cold-cathode lamp, sodium-vapor lamp), or a combination of them.

12. A process for verifying a document described in one of claims 1 through 8, comprising the following steps:
- Capturing the spectral time course of the optical signals from the display elements of the subset in an image refresh period,
- Checking reference information with the help of the spectral time course.
- wherein there is, in particular, decoding of information from the spectral time course and/or from the arrangement of the display elements of the subset, the information being compared with reference information.

## Revendications

1. Document avec un dispositif d'affichage intégré (102), qui présente plusieurs éléments d'affichage (103) pouvant être régulés, où chacun des éléments d'affichage est conçu pour l'émission d'un signal optique en vue d'une restitution de premières données (106) mémorisées dans le document , où le dispositif d'affichage est conçu pour une commande cyclique des éléments d'affichage pour la restitution des premières données à des périodes de renouvellement des images se suivant les unes les autres, et où le dispositif d'affichage est conçu de telle façon que l'émission des signaux optiques d'au moins un sous-ensemble des éléments d'affichage s'effectue avec une évolution du spectre dans le temps, où l'évolution du spectre dans le temps n'est pas perceptible visuellement, où les éléments d'affichage présentent un luminophore pour la création du signal optique, et où les éléments optiques d'un sous-ensemble présentent un premier cristal hôte pour le luminophore et où les éléments d'affichage restants, qui ne font pas partie du sous-ensemble, présentent un deuxième cristal hôte pour la réception du luminophore, où les premier et deuxième cristaux hôtes sont différents, où les éléments d'affichage du sous-ensemble ont un comportement d'interlocuteur qui se distingue du comportement d'interlocuteur des autres éléments d'affichage et ce qui conduit à la variation de l'évolution du spectre dans le temps, où il s'agit, dans le cas du document, d'un document basé sur du papier et/ou basé sur de la matière plastique comme, par exemple, un document d'identité, notamment un passeport, une carte d'identité, un visa, un permis de conduire, un certificat de véhicule, un titre de propriété de véhicule, une carte d'entreprise, une carte de santé ou un autre document d'identité, ou une carte à puces, un moyen de paiement, notamment une carte bancaire ou une carte de crédit, un bon de transport ou un autre certificat prouvant la légitimité, ou une caractéristique électronique, notamment une caractéristique de véhicule électronique.

2. Document selon l'une des revendications précédentes, dans lequel une information est codée dans l'évolution du spectre dans le temps et/ou dans lequel une information est codée dans l'ensemble des éléments d'affichage du sous-ensemble.

3. Document selon l'une des revendications précédentes, avec des moyens (123 ; 142, 144) pour la variation de l'évolution du spectre dans le temps de la commande des éléments d'affichage faisant partie du sous-ensemble.

4. Document selon la revendication 3, avec un circuit pilote (122) pour la commande des éléments d'affichage, où le circuit pilote présente des moyens (123) pour la variation de l'évolution du spectre dans le temps de la commande des éléments d'affichage faisant partie du sous-ensemble.

5. Document selon l'une des revendications précédentes, dans lequel les éléments d'affichage sont disposés dans une matrice active, où un circuit d'activation est associé à chacun des éléments d'affichage, et où les circuits d'activation des éléments d'affichage faisant partie du sous-ensemble contiennent des moyens pour la variation de l'évolution du spectre dans le temps de la commande.

6. Document selon l'une des revendications précédentes, dans lequel le dispositif d'affichage présente une zone dans laquelle aucun élément d'affichage du sous-ensemble n'est disposé.

7. Document selon l'une des revendications précédentes, dans lequel le document contient un circuit imprimé (104) électronique intégré et une mémoire (126) pour le stockage de données (127) nécessitant une protection et des moyens (130) pour l'exécution d'un protocole cryptographique, et avec une interface (124) vers un appareil de lecture (108), où un accès de l'appareil de lecture sur les données nécessitant une protection par l'intermédiaire de l'interface est conditionné à l'exécution du protocole cryptographique à l'aide de l'information.

8. Document selon l'une des revendications précédentes, dans lequel il s'agit de l'identification d'un véhicule dans le cas des premières données (106), et dans lequel une information (107) est émise par l'évolution du spectre dans le temps.

9. Appareil de lecture avec un document selon l'une des revendications précédentes, avec un capteur optique (110) pour la détermination de l'évolution du spectre dans le temps des signaux optiques du sous-ensemble des éléments d'affichage.

10. Appareil de lecture selon la revendication 9, dans lequel la détermination du décalage dans le temps est effectuée par une détermination d'un profil d'intensité résolu dans le temps du rayonnement émis par les éléments d'affichage.

11. Appareil de lecture selon l'une des revendications précédentes 9 ou 10, avec des moyens (138) pour l'exécution d'un protocole cryptographique et une interface (132) pour une communication avec le document, où un accès sur les données (127) nécessitant une protection du document présuppose que le protocole cryptographique a été exécuté avec succès à l'aide d'une information déterminée à partir du décalage dans le temps, et/ou avec des moyens pour l'éclairage du document selon l'invention, où la source d'éclairage peut être choisie dans la liste des émetteurs thermiques (par exemple, une ampoule à incandescence, un fil de Nernst), une DEL (inorganique, organique ou hybride), un laser, une lampe à décharge de gaz (par exemple, une lampe à cathode froide, une lampe à vapeurs de sodium) ou une combinaison de ceux-ci.

12. Procédé pour la vérification d'un document selon l'une des revendications 1 à 8, avec les étapes suivantes :
- détermination de l'évolution du spectre dans le temps des signaux optiques d'éléments d'affichage du sous-ensemble dans une période de renouvellement d'image,
- vérification d'une information de référence avec l'aide de l'évolution du spectre dans le temps,
- où, notamment, un décodage d'une information est effectué à partir de l'évolution du spectre dans le temps et/ou de l'ensemble des éléments d'affichage du sous-ensemble et avec une comparaison de l'information avec une information de référence.
